# FASCICULE DE BREVET EUROPEEN

(11) **EP 3 365 970 B1**
(45) Date de publication et mention de la délivrance du brevet: **09.09.2020**
(21) Numéro de dépôt: 16797591.1
(22) Date de dépôt: 18.10.2016
(51) Int. Cl.: H02P 1/26, H02P 9/00

(54) **DÉMARREUR-GÉNÉRATEUR DE TURBOMACHINE A MACHINE ÉLECTRIQUE ASYNCHRONE MULTI-ENROULEMENTS**
GENERATORSTARTER EINER TURBOMASCHINE MIT ASYNCHRONER ELEKTRISCHER MASCHINE MIT MEHREREN WINDUNGEN
GENERATOR STARTER OF A TURBOMACHINE WITH ASYNCHRONOUS MULTI-WINDING ELECTRIC MACHINE

(30) Priorité: 20.10.2015 FR 1559978
(43) Date de publication de la demande: 29.08.2018
(73) Titulaire: Safran Electrical & Power, 31702 Blagnac Cedex (FR)
(72) Inventeur: DE WERGIFOSSE, Eric, 31702 Blagnac Cedex (FR)
(74) Mandataire: Brevalex
(86) Numéro de dépôt international: PCT/FR2016/052684
(87) Numéro de publication internationale: WO 2017/068274

(56) Documents cités:
- US-A- 5 182 508
- US-A- 5 929 612
- US-A1- 2010 164 428
- US-B1- 6 462 429

## Description

### DOMAINE TECHNIQUE

L'invention se rapporte aux démarreurs-générateurs de turbomachines. Son domaine d'application est plus particulièrement celui des démarreurs-générateurs permettant, en mode moteur d'une part, d'agir lors de phases de démarrage de turbomachines (par exemple pour le démarrage de moteurs aéronautiques à turbine à gaz ou pour le démarrage de groupes auxiliaires de puissance, dit APU pour « Auxiliary Power Unit », à turbine à gaz montés sur des aéronefs), et, en mode générateur d'autre part, de fournir de l'énergie électrique à une charge ou un réseau de bord d'un aéronef.

### ÉTAT DE LA TECHNIQUE ANTÉRIEURE

Les systèmes de démarrage des turbomachines sont, à ce jour, principalement de type moteurs pneumatiques ou, pour les plus petites turbomachines, de type moteurs électriques à balais.

Ces systèmes de démarrage ont l'avantage de la simplicité mais ne permettent pas de réaliser des démarrages suivant un profil de couple/vitesse contrôlé. Or la sophistication des turbomachines et le besoin d'augmentation du nombre de démarrages réussis requièrent de plus en plus cette possibilité de démarrage contrôlé.

Par ailleurs, la fiabilité des moteurs à balais est relativement médiocre et la durée entre deux maintenances est à peine de quelques centaines d'heures. Ces machines peuvent en outre difficilement produire des couples et des puissances de démarrage élevés, alors que l'augmentation de ce besoin se fait de plus en plus sentir avec les nouvelles turbomachines.

Il peut en outre avoir intérêt à combiner la fonction de démarrage électrique avec celle de génération électrique pour des raisons bien compréhensibles de masse, d'encombrement et de coût.

En conséquence de ce qui précède, les démarreurs-générateurs sans balais (« brushless starter-generator ») s'imposent de plus en plus comme une solution incontournable. D'autant plus que l'évolution des performances de l'électronique de puissance et de la micro-électronique fait que cette solution, qui nécessite une électronique de pilotage contrôlant couple-vitesse, est désormais compétitive.

La solution de générateur-démarreur sans balais la plus répandue consiste à réutiliser un générateur AC et à le modifier pour qu'il puisse assurer la fonction de démarrage en association avec l'électronique de pilotage. Ces machines, dites WFSG pour « Wound Field Starter Generator », sont de type synchrone à inducteur rotorique bobiné alimenté par une excitatrice via un redresseur tournant pour éviter la présence de balais.

L'avantage de ce type de machine est sa possibilité de réguler la tension générée avec une très faible puissance, correspondant au courant DC à injecter dans le stator de l'excitatrice (quelques ampères). L'inconvénient de ce type de machine est sa complexité qui va de pair avec une fiabilité réduite, une masse et un encombrement importants et un coût élevé.

Lorsque le générateur-démarreur sans balais doit alimenter un réseau de bord AC présentant des normes de distorsion sévères, la machine WFSG reste, à ce jour, la meilleure solution.

Cependant, lorsque le réseau à alimenter est du type DC ou lorsqu'il est du type AC sans contrainte de distorsion, d'autres types de machines, moins complexes, peuvent présenter un intérêt.

Ainsi, la machine synchrone à aimants permanents a été largement étudiée mais ne débouche pas pour l'instant sur des applications réelles du fait des problèmes de sécurité qu'elle pose (risque de feu en cas de panne). La machine asynchrone, elle, ne présente pas ce défaut et présente, en plus, la faculté d'avoir un flux contrôlable. Elle est en outre simple, robuste, fiable et peu coûteuse, et sa masse est avantageuse pour certaines applications.

Ainsi, la machine asynchrone apparaît bien placée pour remplacer avantageusement les machines WFSG pour les besoins de démarreurs-générateurs sans balais associés notamment à des réseaux de bord DC.

On connait ainsi du brevet US 6,462,429 B1 un démarreur-générateur utilisé à bord d'un aéronef qui exploite une machine asynchrone équipée de plusieurs équipements statoriques. Plus précisément, une telle machine comporte un jeu d'enroulements statoriques dit principal, qui est utilisé pour l'échange de puissance active, et un jeu d'enroulements statoriques dit auxiliaire ou d'excitation qui permet de fournir le courant magnétisant requis au fonctionnement de la machine aussi bien en mode moteur qu'en mode générateur.

L'utilisation du jeu d'enroulements principal aussi bien en mode moteur qu'en mode générateur implique d'avoir recours à un onduleur (pour le mode moteur) et à un redresseur (qui ne peut être utilisé qu'en mode générateur). L'utilisation du jeu d'enroulements auxiliaire aussi bien en mode moteur qu'en mode générateur implique d'avoir recours à un onduleur dédié à la fourniture du courant de magnétisation. Le mode de contrôle de la machine nécessite en outre la présence d'une source extérieure ou d'une génératrice auxiliaire à aimants associée à un redresseur pour maintenir le courant de magnétisation. Du fait de la nécessaire présence de ces différents équipements, un tel démarreur-générateur ne s'avère pas satisfaisant.

### EXPOSÉ DE L'INVENTION

L'invention est relative à l'utilisation d'une machine asynchrone dans un démarreur-générateur de turbomachine. Elle vise notamment à proposer une solution qui soit compétitive en termes de masse, de rendement global, de fiabilité et de coût, et en particulier une solution moins complexe que celle proposée dans le brevet US 6,462,429 B1.

A cet effet, l'invention propose un démarreur-générateur de turbomachine, comprenant :
- une machine électrique asynchrone configurée de manière à fonctionner en mode moteur lors d'une phase de démarrage de la turbomachine en étant alimentée par une source électrique et pour fonctionner en mode générateur après la phase de démarrage de la turbomachine pour alimenter une charge électrique ;
- un onduleur agencé entre la source électrique et la machine asynchrone, l'onduleur ayant au moins deux bornes de courant alternatif couplées à la machine asynchrone et au moins deux bornes de courant continu couplées à un bus de courant continu,
caractérisé en ce que la machine asynchrone comprend en outre :
- une unité de contrôle de l'onduleur configurée pour que l'onduleur fournisse sur les au moins deux bornes de courant alternatif couplées à la machine asynchrone un courant de démarrage en mode moteur et un courant de magnétisation en mode générateur ;
- au moins un premier enroulement statorique relié aux bornes de courant alternatif de l'onduleur pour être alimenté par le courant de démarrage en mode moteur et par le courant de magnétisation en mode générateur, et au moins un second enroulement statorique relié à la charge électrique en mode générateur.

Certains aspects préférés mais non limitatifs de ce démarreur-générateur sont les suivants :
- l'au moins un second enroulement statorique est déconnecté de la charge électrique en mode moteur ;
- il comprend un outre un convertisseur agencé entre l'onduleur et la source électrique ;
- la source électrique est une source AC, et le convertisseur est un convertisseur AC-DC ;
- le convertisseur est un convertisseur bidirectionnel et la source électrique est une source rechargeable à laquelle la machine asynchrone fournit de l'énergie via l'au moins un premier enroulement statorique en mode générateur ;
- la charge électrique est un réseau électrique de bord ;
- la charge électrique est une charge DC et démarreur-générateur comprend en outre un redresseur agencé entre l'au moins un second enroulement statorique et la charge DC ;
- le redresseur est intégré à la machine asynchrone ;
- il comprend en outre un convertisseur auxiliaire configuré de manière à charger le bus de courant continu pour assurer l'amorçage du mode générateur ;
- l'au moins un premier enroulement statorique et l'au moins un second enroulement statorique présentent un nombre de spires différent ;
- l'au moins un second enroulement statorique comprend plusieurs jeux d'enroulement comprenant chacun au moins un enroulement statorique, les jeux étant déphasés d'un angle électrique ;
- le rotor de la machine asynchrone est du type cage d'écureuil ;
- il comprend un contacteur d'isolation agencé entre l'onduleur et la source électrique, ledit contacteur d'isolation étant apte à être commandé pour déconnecter l'onduleur de la source électrique en mode générateur ;
- l'unité de contrôle de l'onduleur est configurée, en mode générateur, pour que l'onduleur fournisse le courant de magnétisation sans nécessiter de source extérieure en étant contrôlé à partir d'une mesure de la tension au niveau de la charge électrique et d'une mesure de la tension du bus de courant continu.

L'invention porte également sur une turbomachine équipée d'un démarreur-générateur selon l'invention, ainsi que sur l'utilisation d'un tel démarreur-générateur lors d'une phase de démarrage d'une turbomachine et/ou pour l'alimentation d'une charge électrique après la phase de démarrage de la turbomachine et/ou pour la recharge d'une batterie.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- les figures 1 et 2 sont des schémas représentant des démarreurs-générateurs de turbomachines utilisant des machines asynchrones sans balais ne permettant pas de répondre aux objectifs de l'invention ;
- les figures 3 à 6 sont des schémas représentant des démarreurs-générateurs de turbomachines utilisant des machines asynchrones sans balais conformes à différents modes de réalisation possible de l'invention.

### EXPOSÉ DÉTAILLÉ DE MODES DE RÉALISATION PARTICULIERS

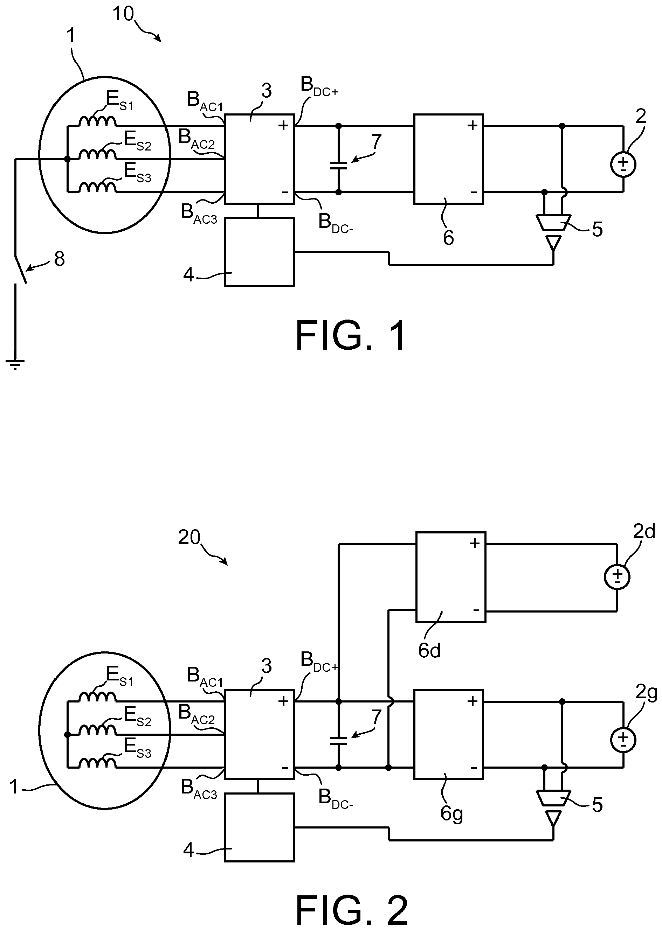

On a représenté sur la figure 1 une option de conception possible d'un démarreur-générateur de turbomachine 10 utilisant une machine électrique tournante asynchrone 1 configurée de manière à fonctionner en mode moteur lors d'une phase de démarrage de la turbomachine en étant alimentée par un réseau de bord 2 (ici DC) et pour fonctionner en mode générateur après la phase de démarrage de la turbomachine pour alimenter le réseau de bord 2.

Le démarreur-générateur de turbomachine 10 comprend par ailleurs un onduleur 3 agencé entre le réseau de bord 2 et la machine asynchrone 1. L'onduleur dispose d'au moins deux bornes de courant continu B_{DC+}, B_{DC-} couplé à un bus DC 7 et d'au moins deux bornes de courant alternatif couplées à la machine asynchrone, et plus précisément de trois bornes de courant alternatif B_{AC1}, B_{AC2}, B_{AC3} dans une version triphasée du démarreur-générateur 10.

Le démarreur-générateur de turbomachine 10 comprend également une unité de contrôle 4 de l'onduleur configurée pour que l'onduleur 3 impose le bon niveau de tension et de fréquence à la machine asynchrone 1, et cela aussi bien en mode moteur qu'en mode générateur. Aux fins de régulation en mode générateur, l'unité de contrôle 4 est reliée à la sortie d'un dispositif de mesure de tension 5 agencé de manière à pouvoir mesurer la tension de sortie lors du mode générateur.

La machine asynchrone 1 comprend au moins un premier enroulement statorique relié à deux bornes de courant alternatif de l'onduleur, typiquement un jeu de trois enroulements statoriques Esl, Es2, Es3 dans la version triphasée, chacun des enroulements Esl, Es2, Es3 étant relié à l'une des bornes de courant alternatif B_{AC1}, B_{AC2}, B_{AC3} de l'onduleur 3. Dans certains cas de figure, l'au moins un premier enroulement statorique Esl, Es2, Es3 peut être relié à la structure mécanique via un contacteur de neutre 8.

Le démarreur-générateur 10 peut également comprendre un circuit d'interface 6 au réseau de bord agencé entre le bus DC 7 et le réseau de bord 2. Ce circuit est utile, en mode générateur, pour éviter de désamorcer la machine 1 lors de transitoires de charge et lors de courts circuits. En effet, en présence d'un court-circuit, il est requis que le système de génération fournisse un courant de défaut pendant un temps suffisamment important pour permettre de déclencher des protections. Le circuit d'interface 6 vise ainsi à limiter la décharge du bus interne 7 en cas de surcharge ou de transitoire. Le circuit d'interface 6 peut être un convertisseur à découpage de type Buck-Boost.

On relèvera que la solution proposée dans le brevet US 6,462,429 B1 est moins satisfaisante que celle proposée en figure 1. En effet, bien qu'il soit possible de passer outre le circuit d'interface 6, la solution du brevet US compte un onduleur et un redresseur de plus (onduleur dédié à la fourniture du courant de magnétisation au jeu d'enroulements auxiliaire et redresseur nécessaire pour assurer le mode générateur).

Dans le cadre de la figure 1, le réseau de bord 2 est utilisé à la fois en mode moteur et en mode générateur. Cependant, il se peut que le réseau (et plus largement la source électrique) utilisé pour le démarrage soit différent du réseau (plus largement la charge électrique) utilisé pour la génération. Le type, alternatif ou continu, ou le niveau de tension peuvent également différer entre le réseau de démarrage et le réseau de génération.

On a représenté sur la figure 2 une option de conception possible d'un démarreur-générateur 20 de turbomachine 10 permettant de couvrir ce besoin. Sur cette figure 2, les éléments identiques à ceux représentés sur la figure 1 portent les mêmes références. On y retrouve cependant un premier réseau de bord 2d pour alimenter la machine 1 en mode moteur (ici un réseau DC), ce premier réseau 2d étant distinct d'un second réseau de bord 2g alimenté par la machine 1 en mode générateur (ici un réseau DC).

Le démarreur-générateur 20 comprend un premier convertisseur 6d agencé entre le bus DC interne 7 et le premier réseau de bord 2d de démarrage pour assurer l'adaptation du premier réseau de bord 2d au bus DC interne 7. Il comprend un second convertisseur 6g agencé entre le bus DC interne 7 et le second réseau de bord 2g de génération pour réguler la tension fournie au second réseau 2g en mode générateur.

Dans la plupart des cas, pour des raisons de non compatibilité entre les points de mise à la structure mécanique ou pour des besoins de ségrégation entre les réseaux, au moins un des deux convertisseurs 6d, 6g doit présenter une isolation galvanique afin d'éviter la propagation de certains défauts. Cette isolation galvanique peut être intéressante également pour se prémunir contre certaines pannes, propres aux convertisseurs à découpage, pouvant conduire à des surtensions sur les réseaux de bord.

Ainsi, lorsque les réseaux de démarrage et de génération sont différents, l'intérêt de l'utilisation d'une machine asynchrone peut devenir discutable, car les besoins suivant peuvent apparaître au cas par cas :
- En génération, un circuit d'interface au réseau est généralement requis pour couvrir les cas de surcharge et de transitoires.
- Si la puissance en génération est importante, il faut associer à un onduleur répondant à ce niveau de puissance un système de refroidissement dimensionné en conséquence, pour une dissipation permanente.
- Il est nécessaire d'ajouter au moins un convertisseur pour réaliser l'adaptation de tension du réseau de démarrage.
- Si une isolation galvanique est requise, au moins un des convertisseurs devra l'assurer.

Ces différents besoins peuvent conduire à des volumes de circuit électronique qui rendent ces solutions à base de machine asynchrone moins compétitives en termes de masse, de rendement global, de fiabilité et de coût.

On relèvera que la solution proposée dans le brevet US 6,462,429 B1 est également moins satisfaisante que celle proposée en figure 2. En effet, si le réseau de démarrage est différent du réseau de génération, la solution du brevet US ne permet pas d'assurer la conversion de tension et l'isolation galvanique. Il serait alors nécessaire de rajouter un convertisseur avec isolation, ou de l'insérer en lieu et place du redresseur.

Afin de contourner ces difficultés, il est proposé dans le cadre de l'invention d'utiliser le circuit magnétique statorique de la machine asynchrone pour réaliser l'adaptation de tension pour la source électrique de démarrage ainsi que l'isolation galvanique entre la source électrique de démarrage et la charge électrique de génération. Pour ce faire, l'invention vient associer une machine asynchrone comportant au moins un premier enroulement statorique et au moins un second enroulement statorique (typiquement un premier jeu d'enroulements triphasés et un second jeu d'enroulements triphasés) avec un onduleur assurant la double fonction de contrôle du courant total en mode moteur et de contrôle uniquement du courant de magnétisation en mode générateur.

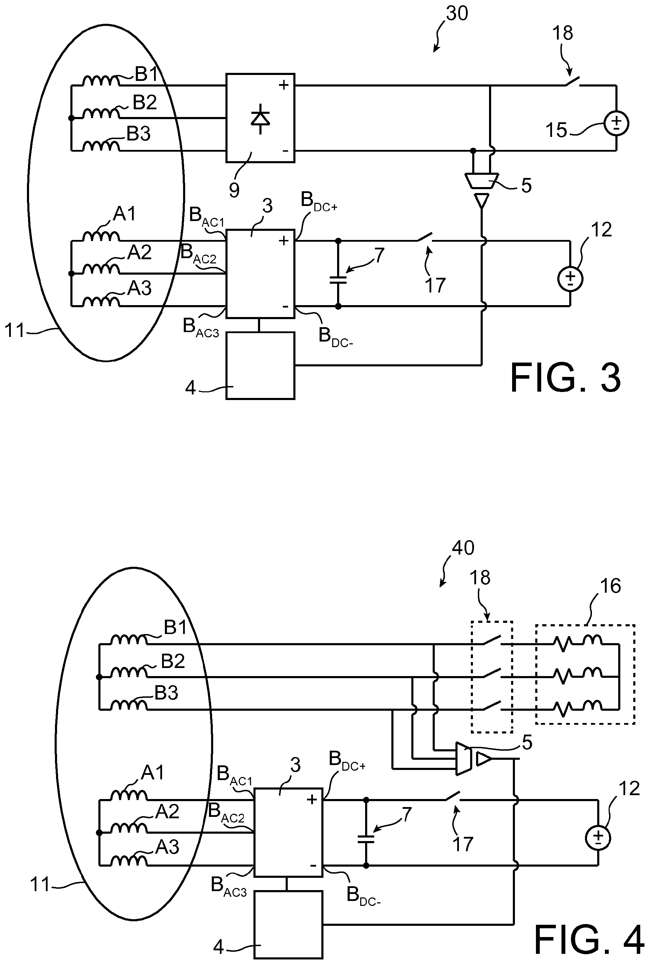

Sur les figures 3-6 qui illustrent différents exemples de réalisation de l'invention, les éléments assurant des fonctions identiques à celles remplies par des éléments représentés sur les figures 1 et 2 portent les mêmes références. En référence à ces figures 3-6, l'invention porte sur un démarreur-générateur de turbomachine 30, 40, 50, 60 qui comprend une machine électrique asynchrone 11, 21 configurée de manière à fonctionner en mode moteur lors d'une phase de démarrage de la turbomachine en étant alimentée par une source électrique 12, 13, 14 et pour fonctionner en mode générateur après la phase de démarrage de la turbomachine pour alimenter une charge électrique 15, 16.

Le démarreur-générateur de turbomachine 30, 40, 50, 60 comprend un onduleur 3 agencé entre la source électrique 12, 13, 14 et la machine asynchrone 11, 21. L'onduleur 3 présente au moins deux bornes de courant alternatif couplées à la machine asynchrone, typiquement trois bornes de courant alternatif B_{AC1}, B_{AC2}, B_{AC3} dans une version triphasée du démarreur-générateur 11, 21. L'onduleur 3 dispose par ailleurs d'au moins deux bornes de courant continu B_{DC+}, B_{DC-} couplé à un bus interne DC 7.

Le démarreur-générateur de turbomachine 30, 40, 50, 60 comprend par ailleurs une unité de contrôle 4 de l'onduleur configurée pour que l'onduleur fournisse sur les au moins deux bornes de courant alternatif B_{AC1}, B_{AC2}, B_{AC3} couplées à la machine asynchrone 11, 21 un courant de démarrage en mode moteur et un courant de magnétisation en mode générateur.

La machine asynchrone comprend au moins un premier enroulement statorique A1, A2, A3 relié à au moins deux bornes de courant alternatif B_{AC1}, B_{AC2}, B_{AC3} de l'onduleur 3 pour être alimenté par le courant de démarrage en mode moteur et par le courant de magnétisation en mode générateur, et au moins un second enroulement statorique B1, B2, B3 relié à la charge électrique 15, 16 en mode générateur.

Le nombre de spires de l'au moins un premier enroulement statorique est adapté en fonction du niveau de tension de la source électrique servant au démarrage tandis que le nombre de spires de l'au moins un second enroulement statorique est adapté en fonction du niveau de tension pour l'alimentation de la charge électrique. Le rotor de la machine peut être du type à cage d'écureuil.

En mode moteur, l'onduleur 4, alimenté par la source électrique 12, 13, 14, pilote la machine asynchrone 11, 21 de façon classique via l'au moins un premier enroulement statorique A1, A2, A3 uniquement. L'au moins un second enroulement statorique B1, B2, B3 est inutilisé et n'est traversé par aucun courant. La sortie de l'au moins un second enroulement statorique peut être déconnectée de la charge électrique 15, 16 au moyen d'un premier contacteur d'isolation 18 ouvert en mode moteur.

En mode générateur, l'onduleur 4 fournit uniquement le courant de magnétisation de la machine 11, 21 via l'au moins un premier enroulement statorique A1, A2, A3. Aux pertes près, l'onduleur ne délivre donc que de la puissance réactive et peut être déconnecté de la source électrique 12, 13, 14 au moyen d'un second contacteur d'isolation 17 ouvert en mode générateur. Les pertes, dans l'au moins un premier enroulement statorique A1, A2, A3 et de l'onduleur, sont compensées par un prélèvement de puissance active au niveau de la machine.

La non-nécessité d'une source extérieure pour engendrer, en mode génération, ce courant de magnétisation, est rendue possible grâce à l'utilisation d'une loi de contrôle spécifique. Cette loi peut prévoir par exemple de mesurer, d'une part, la tension de sortie du mode générateur via le dispositif de mesure 5 et, d'autre part, la tension sur l'entrée DC de l'onduleur 3 pour équilibrer les puissances actives et réactives de la machine, en agissant à la fois sur le niveau de courant de sortie de cet onduleur et sur sa fréquence.

L'au moins un second enroulement statorique B1, B2, B3 fournit la puissance à la charge électrique 15, 16 (le premier contacteur d'isolation 18 étant fermé), et cela directement au bon niveau de tension. En effet, le circuit de contrôle 4 commandant l'onduleur régule en permanence la tension fournie à la charge électrique (au moyen de la mesure de cette tension par le dispositif 5) en jouant sur le niveau et la fréquence du courant de magnétisation.

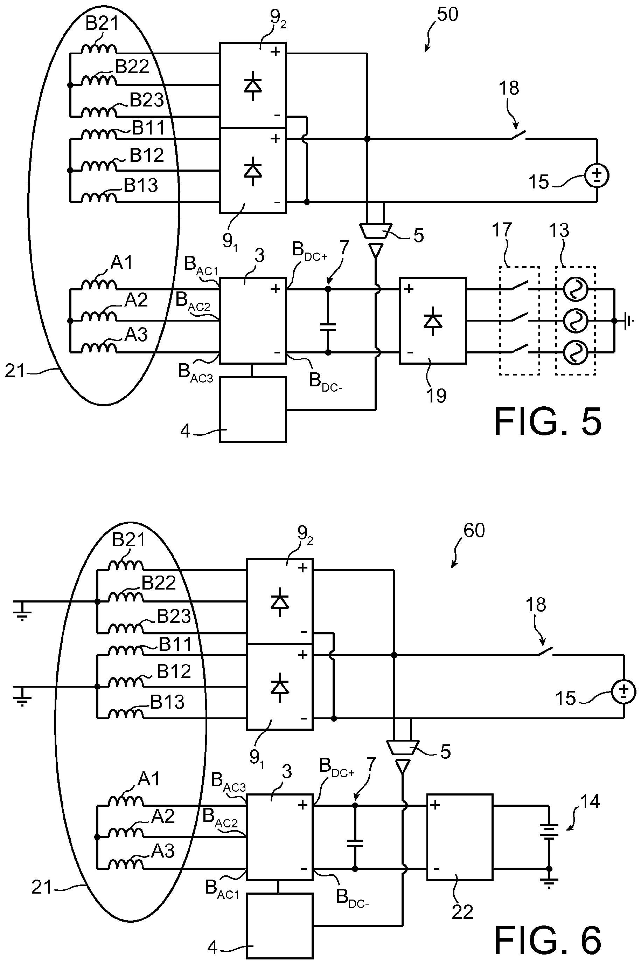

Comme représenté sur les figures 3-6, l'au moins un premier enroulement statorique est typiquement un premier jeu d'enroulements triphasés A1, A2, A3, sans pour autant que cela ne soit limitatif, l'invention s'étendant à un démarreur-générateur présentant un nombre quelconque de phases. De manière similaire, l'au moins un second enroulement statorique est typiquement un second jeu d'enroulements triphasés B1, B2, B3 comme représenté sur les figures 3 et 4, sans pour autant que cela ne soit limitatif. En particulier, l'au moins un second enroulement statorique peut comprendre une pluralité de jeux comprenant chacun au moins un enroulement statorique, les jeux étant déphasés d'un angle électrique entre eux, par exemple deux jeux d'enroulements triphasés B11, B12, B13 ; B21, B22, B23 déphasés de 30° comme représenté sur les figures 5 et 6. Une telle multiplicité de jeux permet de minimiser l'ondulation de la tension après son redressement.

Dans les modes de réalisation représentés sur les figures 3 et 4, la source électrique 12 est une source DC, par exemple un réseau électrique DC, en particulier un réseau de bord DC.

Dans le mode de réalisation représenté sur la figure 3, la charge électrique 15 est une charge DC, par exemple un réseau électrique DC, en particulier un réseau de bord DC. Dans un tel cas de figure, le démarreur-générateur 30 comprend en outre un redresseur 9 agencé entre l'au moins un premier enroulement statorique B1, B2, B3 et la charge DC 15. Dans une variante avantageuse, le redresseur 9 est intégré à la machine asynchrone 11 et peut ainsi bénéficier du système de refroidissement de celle-ci.

Lorsque l'on a recours à une multiplicité de jeux d'au moins un second enroulement statorique, chacun de ces jeux B11, B12, B13 ; B21, B22, B23 peut être associé à un redresseur correspondant 9₁; 9₂ comme représenté sur les figures 5 et 6.

Dans le mode de réalisation représenté sur la figure 4, la charge électrique 16 est une charge AC. Dans un tel cas de figure, le redresseur n'est donc plus nécessaire. On relèvera que la machine asynchrone n'est pas connue pour produire un sinus très pur, ce qui peut poser des difficultés s'il s'agit d'alimenter un réseau de bord AC. En revanche, la solution de la figure 4 est parfaitement adaptée à des charges AC 16 qui acceptent un certain taux de distorsion, comme des résistances de dégivrage.

On constate de la comparaison des figures 3 et 4 avec la figure 2, que dans le cadre de l'invention, il n'y a pas lieu de rajouter un convertisseur adaptant le niveau de tension et réalisant l'isolation galvanique car ces fonctions sont déjà assurées par les différents enroulements prévus au stator de la machine.

La taille de l'onduleur utilisé dans le cadre de l'invention peut par ailleurs être minimisée. En effet, l'onduleur est alors dimensionné pour le besoin le plus contraignant : soit pour le besoin en mode moteur, soit pour 25 à 30% du besoin en mode générateur (la puissance réactive vaut en général 25 à 30% de la puissance active).

Le rendement en mode générateur est en outre optimal puisqu'on ne retrouve qu'un seul étage de conversion AC vers DC, sans convertisseur à découpage.

Enfin, l'invention s'affranchit des contraintes portant sur les points de connexion à la structure car l'isolation galvanique est assurée par les jeux d'enroulement disposés sur le circuit magnétique statorique. En conséquence, un contacteur de neutre ne s'avère pas nécessaire.

Là où dans les modes de réalisation représentés sur les figures 3 et 4, la source électrique 12 est une source DC, dans le mode de réalisation illustré sur la figure 5, il s'agit au contraire d'une source AC 13, notamment un réseau de bord AC, par exemple un réseau triphasé du type 3^{∗}115 Vrms-400 Hz. Sur la figure 5, la charge est une charge DC, par exemple un réseau de bord de type 28Vdc. La source 13 étant de type AC, un convertisseur AC-DC 19 est agencé entre le bus interne DC 7 et la source électrique 13.

Le réseau de démarrage triphasé 13 est tel que le neutre est relié à la structure, tandis que le réseau de génération 15 est tel que le moins est à la structure. Le circuit magnétique statorique selon l'invention permet d'assurer l'isolation galvanique entre la partie basse tension (3^{∗}115Vac, 270Vdc) et la partie très basse tension (28Vdc).

L'au moins un premier enroulement statorique présente ici plus de spires que l'au moins un second enroulement statorique puisqu'il est prévu pour travailler à plus haute tension.

En mode moteur, le second contacteur d'isolation 17 est fermé de façon à alimenter le convertisseur 19 qui produit du 270 Vdc sur le bus interne 7. L'onduleur triphasé 3 utilise cette énergie pour induire des courants AC, dans l'au moins un premier enroulement statorique A1, A2, A3, à une amplitude et une fréquence dépendant du couple à fournir. Les seconds enroulements statoriques B11, B12, B13 ; B21, B22, B23 sont inutilisés. Le premier contacteur d'isolation 18 reste ouvert pour éviter de charger la machine avec le réseau 28Vdc.

En mode générateur, le second contacteur d'isolation 17 est ouvert. Lorsque le démarreur-générateur 50 doit passer en mode générateur, le bus DC interne 7 est chargé à un niveau de tension suffisant pour assurer l'amorçage par l'intermédiaire d'un petit convertisseur auxiliaire (non représenté). L'onduleur 3 est alors mis en fonction pour magnétiser la machine 21. Le convertisseur auxiliaire peut alors être désactivé. Le circuit de contrôle 4 ajuste le courant de magnétisation pour réguler la tension de sortie au bon niveau, soit 28Vdc dans cet exemple. Dès que la tension de sortie est stabilisée, le premier contacteur d'isolation 18 peut être fermé de façon à ce que la machine puisse alimenter le réseau 28Vdc de bord 15.

On a représenté sur la figure 6 un autre mode de réalisation possible d'un démarreur-générateur 60 conforme à l'invention dans lequel la source électrique de démarrage est une batterie 14. Un tel mode de réalisation peut trouver application au besoin d'un démarreur-générateur d'APU. Le démarrage de l'APU doit pouvoir se réaliser à partir d'une batterie, en général 24Vdc. Le niveau de puissance requis pour cette opération est généralement compris entre 4 et 10kW mécanique. En revanche, la puissance à fournir en génération peut être de plusieurs 10kW, sous une tension de 270Vdc dans un exemple de réalisation.

Le réseau de génération 15 est tel que le neutre de la machine 21 est relié à la structure. Pour la batterie 14, le moins est connecté à la structure. Le circuit magnétique statorique selon l'invention permet d'assurer l'isolation galvanique entre la partie basse tension (3^{∗}115Vac, 270Vdc) et la partie très basse tension (28Vdc).

L'au moins un premier enroulement statorique présente ici moins de spires que l'au moins un second enroulement statorique puisqu'il est prévu pour travailler à plus basse tension.

Dans un mode de réalisation possible, un convertisseur bidirectionnel 22 peut être agencé entre le bus interne DC 7 et la batterie 14 pour permettre de contrôler la décharge de la batterie en mode moteur et sa recharge via l'au un premier enroulement statorique A1, A2, A3.

En mode moteur, le convertisseur 22 est activé pour permettre d'alimenter le bus DC interne 7 avec le niveau de tension adéquat. L'onduleur 3 utilise cette énergie pour induire des courants AC dans l'au moins un premier enroulement statorique A1, A2, A3 à une amplitude et une fréquence dépendant du couple à fournir. Les seconds enroulements statoriques B11, B12, B13 ; B21, B22, B23 sont inutilisés. Le premier contacteur d'isolation 18 reste ouvert, dans ce mode, pour éviter de charger la machine avec le réseau 270Vdc.

Le passage en mode générateur, une fois la phase de démarrage réalisée, nécessite que le bus DC interne 7 soit chargé à un niveau de tension suffisant pour assurer l'amorçage, via le convertisseur 22. L'onduleur 3 est alors mis en fonction pour magnétiser la machine. Le convertisseur 22 peut alors être désactivé. Le circuit de contrôle 4 ajuste le courant de magnétisation pour réguler la tension de sortie au bon niveau, soit 270Vdc dans cet exemple. Dès que la tension de sortie est stabilisée, le premier contacteur 18 peut être fermé de façon à ce que la machine puisse alimenter le réseau 270Vdc de bord 15.

La recharge de la batterie 14 nécessite que la machine soit magnétisée. Cela peut être réalisé en suivant les opérations décrites précédemment pour passer en mode générateur. Une fois magnétisée, la machine 21, pilotée par l'onduleur 3, alimente le bus DC 7 via l'au moins un premier enroulement. Le convertisseur 22 utilise l'énergie de ce bus DC pour recharger la batterie avec un contrôle précis du profil de courant injecté. Cette opération de recharge de la batterie peut être réalisée en même temps, ou non, que la génération principale à 270Vdc.

L'invention n'est pas limitée à un démarreur-générateur tel que précédemment décrit, mais s'étend également à une turbomachine équipée d'un tel démarreur-générateur. L'invention vise également l'utilisation décrite précédemment du démarreur-générateur selon l'invention lors d'une phase de démarrage d'une turbomachine et/ou pour l'alimentation d'une charge électrique après la phase de démarrage de la turbomachine et/ou pour la recharge d'une batterie.

## Revendications

1. Démarreur-générateur (30, 40, 50, 60) de turbomachine, comprenant :
- une machine électrique asynchrone (11, 21) configurée de manière à fonctionner en mode moteur lors d'une phase de démarrage de la turbomachine en étant alimentée par une source électrique (12, 13, 14) et pour fonctionner en mode générateur après la phase de démarrage de la turbomachine pour alimenter une charge électrique (15, 16) ;
- un onduleur (3) agencé entre la source électrique et la machine asynchrone, l'onduleur ayant au moins deux bornes de courant alternatif couplées à la machine asynchrone et au moins deux bornes de courant continu couplées à un bus de courant continu (7),
**caractérisé en ce que** la machine asynchrone comprend en outre :
- une unité de contrôle (4) de l'onduleur configurée pour que l'onduleur fournisse sur les au moins deux bornes de courant alternatif (B_{AC1}, B_{AC2}, B_{AC3}) couplées à la machine asynchrone un courant de démarrage en mode moteur et un courant de magnétisation en mode générateur ;
- au moins un premier enroulement statorique (A1, A2, A3) relié aux bornes de courant alternatif de l'onduleur pour être alimenté par le courant de démarrage en mode moteur et par le courant de magnétisation en mode générateur, et au moins un second enroulement statorique (B1, B2, B3) relié à la charge électrique en mode générateur.

2. Démarreur-générateur selon la revendication 1, dans lequel l'au moins un second enroulement statorique est déconnecté de la charge électrique en mode moteur.

3. Démarreur-générateur (50, 60) selon l'une des revendications 1 et 2, comprenant un outre un convertisseur (19, 22) agencé entre l'onduleur et la source électrique.

4. Démarreur-générateur (50) selon la revendication 3, dans lequel la source électrique est une source AC (13), et le convertisseur est un convertisseur AC-DC (19).

5. Démarreur-générateur selon la revendication 3, dans lequel le convertisseur est un convertisseur bidirectionnel (22) et dans lequel la source électrique est une source rechargeable (14) à laquelle la machine asynchrone fournit de l'énergie via l'au moins un premier enroulement statorique en mode générateur.

6. Démarreur-générateur selon l'une des revendications 1 à 5, dans lequel la charge électrique est un réseau électrique de bord.

7. Démarreur-générateur selon l'une des revendications 1 à 6, dans lequel la charge électrique est une charge DC (15) et comprenant en outre un redresseur (9, 9₁, 9₂) agencé entre l'au moins un second enroulement statorique et la charge DC.

8. Démarreur-générateur selon la revendication 7, dans lequel le redresseur est intégré à la machine asynchrone.

9. Démarreur-générateur selon l'une des revendications 1 à 8, comprenant en outre un convertisseur auxiliaire configuré de manière à charger le bus de courant continu (7) pour assurer l'amorçage du mode générateur.

10. Démarreur-générateur selon l'une des revendications 1 à 9, dans lequel l'au moins un second enroulement statorique comprend plusieurs jeux d'enroulement comprenant chacun au moins un enroulement statorique, les jeux étant déphasés d'un angle électrique.

11. Démarreur-générateur selon la revendication 10, dans lequel l'au moins un second enroulement statorique comprend deux jeux d'enroulement statoriques triphasés déphasés de 30 °.

12. Démarreur-générateur selon l'une des revendications 1 à 11, dans lequel l'au moins un premier enroulement statorique et l'au moins un second enroulement statorique sont des enroulements triphasés.

13. Démarreur-générateur selon l'une des revendications 1 à 11, dans lequel l'au moins un premier enroulement statorique et l'au moins un second enroulement statorique présentent un nombre de spires différent.

14. Démarreur-générateur selon l'une des revendications 1 à 13, dans lequel le rotor de la machine asynchrone est du type cage d'écureuil.

15. Démarreur-générateur selon l'une des revendications 1 à 13, comprenant en outre un contacteur d'isolation (17) agencé entre l'onduleur et la source électrique, ledit contacteur d'isolation étant apte à être commandé pour déconnecter l'onduleur de la source électrique en mode générateur.

16. Démarreur-générateur selon l'une des revendications 1 à 15, dans lequel l'unité de contrôle (4) de l'onduleur est configurée, en mode générateur, pour que l'onduleur fournisse le courant de magnétisation sans nécessiter de source extérieure en étant contrôlé à partir d'une mesure de la tension au niveau de la charge électrique et d'une mesure de la tension du bus de courant continu (7).

17. Turbomachine équipée d'un démarreur-générateur selon l'une des revendications 1 à 16.

18. Utilisation d'un démarreur-générateur de turbomachine selon l'une des revendications 1 à 17 lors d'une phase de démarrage d'une turbomachine et/ou pour l'alimentation d'une charge électrique après la phase de démarrage de la turbomachine et/ou pour la recharge d'une batterie.

## Patentansprüche

1. Generatorstarter (30, 40, 50, 60) einer Turbomaschine, mit:
- einer asynchronen elektrischen Maschine (11, 21), die dazu ausgeführt ist, während einer Startphase der Turbomaschine im Motormodus zu laufen, indem sie von einer Stromquelle (12, 13, 14) versorgt wird, und um nach der Startphase der Turbomaschine im Generatormodus zu arbeiten, um eine elektrische Ladung (15, 16) zuzuführen;
- einem Wechselrichter (3), der zwischen der Stromquelle und der asynchronen Maschine angeordnet ist, wobei der Wechselrichter mindestens zwei Wechselstromanschlüsse, die mit der asynchronen Maschine gekoppelt sind, und mindestens zwei Gleichstromanschlüsse aufweist, die mit einem Gleichstrombus (7) gekoppelt sind,
**dadurch gekennzeichnet, dass** die asynchrone Maschine weiterhin Folgendes umfasst:
- eine Steuereinheit (4) des Wechselrichters, die so ausgeführt ist, dass der Wechselrichter an die mindestens zwei, mit der asynchronen Maschine gekoppelten Wechselstromanschlüsse (B_{AC1}, B_{AC2}, B_{AC3}) einen Startstrom im Motormodus und einen Magnetisierungsstrom im Generatormodus liefert;
- mindestens eine erste Ständerwicklung (A1, A2, A3), die mit den Wechselstromanschlüssen des Wechselrichters verbunden ist, um im Motormodus durch den Startstrom und im Generatormodus durch den Magnetisierungsstrom betrieben zu werden, sowie mindestens eine zweite Ständerwicklung (B1, B2, B3), die im Generatormodus mit der elektrischen Ladung verbunden ist.

2. Generatorstarter nach Anspruch 1, in dem die mindestens eine zweite Ständerwicklung im Motormodus von der elektrischen Ladung getrennt ist.

3. Generatorstarter (50, 60) nach einem der Ansprüche 1 und 2, weiterhin mit einem zwischen dem Wechselrichter und der Stromquelle angeordneten Wandler (19, 22).

4. Generatorstarter (50) nach Anspruch 3, in dem die Stromquelle eine Wechselstromquelle (13) ist und der Wandler ein Wechselstrom-Gleichstromwandler (19) ist.

5. Generatorstarter nach Anspruch 3, in dem der Wandler ein bidirektionaler Wandler (22) ist und in dem die Stromquelle eine wiederaufladbare Quelle (14) ist, an welche die asynchrone Maschine im Generatormodus über die mindestens eine erste Ständerwicklung Energie liefert.

6. Generatorstarter nach einem der Ansprüche 1 bis 5, in dem die elektrische Ladung ein elektrisches Bordnetz ist.

7. Generatorstarter nach einem der Ansprüche 1 bis 6, in dem die elektrische Ladung eine Gleichstromladung (15) ist, und der außerdem einen Gleichrichter (9, 9i, 9₂) aufweist, der zwischen der mindestens einen zweiten Ständerwicklung und der Gleichstromladung angeordnet ist.

8. Generatorstarter nach Anspruch 7, in dem der Gleichrichter in die asynchrone Maschine integriert ist.

9. Generatorstarter nach einem der Ansprüche 1 bis 8, weiterhin mit einem zusätzlichen Wandler, der derart ausgeführt ist, dass er den Gleichstrombus (7) auflädt, um die Zündung des Generatormodus sicherzustellen.

10. Generatorstarter nach einem der Ansprüche 1 bis 9, in dem die mindestens eine zweite Ständerwicklung mehrere Wicklungssätze jeweils mit mindestens einer Ständerwicklung aufweist, wobei die Sätze um einen elektrischen Winkel phasenverschoben sind.

11. Generatorstarter nach Anspruch 10, in dem die mindestens eine zweite Ständerwicklung zwei Sätze von dreiphasigen, um 30° phasenverschobenen Ständerwicklungen umfasst.

12. Generatorstarter nach einem der Ansprüche 1 bis 11, in dem die mindestens eine erste Ständerwicklung und die mindestens eine zweite Ständerwicklung dreiphasige Wicklungen sind.

13. Generatorstarter nach einem der Ansprüche 1 bis 11, in dem die mindestens eine erste Ständerwicklung und die mindestens eine zweite Ständerwicklung eine unterschiedliche Anzahl von Windungen aufweisen.

14. Generatorstarter nach einem der Ansprüche 1 bis 13, in dem der Rotor der asynchronen Maschine vom Käfigwicklungstyp ist.

15. Generatorstarter nach einem der Ansprüche 1 bis 13, weiterhin mit einem Isolierschütz (17), das zwischen dem Wechselrichter und der Stromquelle angeordnet ist, wobei das Isolierschütz dazu geeignet ist, zum Trennen des Wechselrichters im Generatormodus von der Stromquelle betätigt zu werden.

16. Generatorstarter nach einem der Ansprüche 1 bis 15, in dem die Steuereinheit (4) des Wechselrichters im Generatormodus so ausgeführt ist, dass der Wechselrichter den Magnetisierungsstrom liefert, ohne eine äußere Quelle zu benötigen, indem er ab einer Messung der Spannung auf der Höhe der elektrischen Ladung und ab einer Messung der Spannung des Gleichstrombusses (7) gesteuert wird.

17. Turbomaschine, die mit einem Generatorstarter nach einem der Ansprüche 1 bis 16 ausgerüstet ist.

18. Verwendung eines Generatorstarters einer Turbomaschine nach einem der Ansprüche 1 bis 17 während einer Startphase einer Turbomaschine und/oder zur Versorgung mit elektrischer Ladung nach der Startphase der Turbomaschine und/oder zum Wiederaufladen einer Batterie.

## Claims

1. Turbomachine starter-generator (30, 40, 50, 60), comprising:
- an asynchronous electric machine (11, 21) configured so as to operate in motor mode during a starting phase of the turbomachine while being supplied by an electrical source (12, 13, 14), and so as to operate in generator mode after the starting phase of the turbomachine in order to supply power to an electrical load (15, 16),
- an inverter (3) arranged between the electrical source and the asynchronous machine, the inverter having at least two AC terminals coupled to the asynchronous machine and at least two DC terminals coupled to a DC bus (7),
**characterised in that** the asynchronous machine also comprises:
- an inverter control unit (4) configured such that the inverter outputs a starting current in motor mode and a magnetisation current in generator mode, onto the at least two AC terminals (B_{AC1}, B_{AC2}, B_{AC3}) coupled to the asynchronous machine;
- at least one first stator winding (A1, A2, A3) connected to the alternating current terminals of the inverter in order to be supplied with the starting current in motor mode and with the magnetisation current in generator mode, and at least one second stator winding (B1, B2, B3) connected to the electrical load in generator mode.

2. Starter-generator according to claim 1, in which the at least one second stator winding is disconnected from the electrical load in motor mode.

3. Starter-generator (50, 60) according to either claim 1 or claim 2, further comprising a converter (19, 22) arranged between the inverter and the electrical source.

4. Starter-generator (50) according to claim 3, in which the electrical source is an AC source (13), and the converter is an AC-DC converter (19).

5. Starter-generator according to claim 3, in which the converter is a two-directional converter (22) and in which the electrical source is a rechargeable source (14) to which the asynchronous machine outputs energy through the at least one first stator winding in generator mode.

6. Starter-generator according to one of claims 1 to 5, in which the electrical load is an onboard electrical network.

7. Starter-generator according to one of claims 1 to 6, in which the electrical load is a DC load (15) and further comprising a rectifier (9, 9₁, 9₂) arranged between the at least one second stator winding and the DC load.

8. Starter-generator according to claim 7, in which the rectifier is integrated into the asynchronous machine.

9. Starter-generator according to one of claims 1 to 8, further comprising an auxiliary converter configured so as to load the DC bus (7) to initiate the generator mode.

10. Starter-generator according to one of claims 1 to 9, in which the at least one second stator winding comprises several sets of windings each comprising at least one stator winding, the sets being out of phase by an electrical angle.

11. Starter-generator according to claim 10, in which the at least one second stator winding comprises two sets of three-phase stator windings out-of-phase by 30°.

12. Starter-generator according to one of claims 1 to 11, in which the at least one first stator winding and the at least one second stator winding are three-phase windings.

13. Starter-generator according to one of claims 1 to 11, in which the at least one first stator winding and the at least on second stator winding have a different number of turns.

14. Starter-generator according to one of claims 1 to 13, in which the rotor of the asynchronous machine is of the squirrel cage type.

15. Starter-generator according to one of claims 1 to 13, also comprising an isolation contactor (17) arranged between the inverter and the electrical source, said isolation contactor being capable of being controlled to disconnect the inverter from the electrical source in generator mode.

16. Starter-generator according to one of claims 1 to 15, in which the inverter control unit (4) is configured in generator mode such that the inverter supplies the magnetisation current without the need for an external source while being controlled from a voltage measurement at the electrical load and a voltage measurement on the DC bus (7).

17. Turbomachine equipped with a starter-generator according to one of claims 1 to 16.

18. Use of a turbomachine starter-generator according to one of claims 1 to 17 during a turbomachine starting phase and/or for the power supply to an electrical load after the starting phase of the turbomachine and/or to recharge a battery.
